Europäisches Patentamt

European Patent Office

Office européen des brevets

(19)

(11) EP 1 508 992 A2

(12) **EUROPEAN PATENT APPLICATION**

(43) Date of publication:
23.02.2005 Bulletin 2005/08

(51) Int Cl.⁷: $H04L\ 1/20$, $H04L\ 1/06$

(21) Application number: 04019516.6

(22) Date of filing: 17.08.2004

(84) Designated Contracting States:
AT BE BG CH CY CZ DE DK EE ES FI FR GB GR
HU IE IT LI LU MC NL PL PT RO SE SI SK TR
Designated Extension States:
AL HR LT LV MK

(30) Priority: 18.08.2003 US 495916 P
19.04.2004 KR 2004026783

(71) Applicants:
• Samsung Electronics Co., Ltd.
Suwon-si, Gyeonggi-do (KR)
• Board of Regents,
The University of Texas System
Austin Texas 78701 (US)

(72) Inventors:
• Cho, Sung-Hyun, Samsung Electronics. Co., Ltd.
Suwon-si, Gyeonggi-do (KR)
• Chung, Jae-Hak, Samsung Electronics. Co., Ltd.
Suwon-si, Gyeonggi-do (KR)
• Park, Won-Hyong,
Samsung Electronics. Co., Ltd.
Suwon-si, Gyeonggi-do (KR)
• Airy, Manish
Austin, TX 78731 (US)
• Heath, Robert W.
Austin, TX 78729 (US)

(74) Representative: Grünecker, Kinkeldey,
Stockmair & Schwanhäusser Anwaltssozietät
Maximilianstrasse 58
80538 München (DE)

(54) **Apparatus and method for scheduling resource in a multiuser MIMO radio communication system**

(57) In a multiuser Multiple Input Multiple Output (MIMO) radio communication system, a transmitter receives channel quality information transmitted from receivers, schedules resource for the receivers within a corresponding scheduling epoch based on the received channel quality information. Thereafter, the transmitter pre-codes signals to be transmitted to the resource-scheduled receivers in a predetermined coding method before transmission, thereby maximizing system transmission efficiency.

FIG.2

**Description**

**BACKGROUND OF THE INVENTION**

1. Field of the Invention

The present invention relates generally to a radio communication system using a multiuser Multiple Input Multiple Output (MIMO) scheme (hereinafter referred to as a "multiuser MIMO radio communication system"), and in particular, to an apparatus and method for scheduling resources in a multiuser MIMO radio communication system.

2. Description of the Related Art

With the introduction in the United States in the late 1970's of a cellular mobile communication system, South Korea started to provide a voice communication service based on a first generation (1G) analog mobile communication system, AMPS (Advanced Mobile Phone Service). In the mid 1990's, South Korea deployed a second generation (2G) mobile communication system, CDMA (Code Division Multiple Access), to provide voice and low-speed data services.

In the late 1990's, South Korea partially deployed a third generation (3G) mobile communication system, IMT-2000 (International Mobile Telecommunication-2000), aimed at advanced wireless multimedia service, worldwide roaming, and high-speed data service. The 3G mobile communication system has been specially developed to transmit data at a high rate and large volume.

The 3G mobile communication system is evolving into a fourth generation (4G) mobile communication system. The 4G mobile communication system is still in the standardization process for the purpose of efficient interworking and integrated service between a wired communication network and a wireless communication network beyond simple wireless communication service which the previous generation mobile communication systems provided. Technology needed to transmit large volumes of data up to or at a capacity level available in the wired communication network must be developed for the wireless communication network.

The 4G mobile communication system, a next generation mobile communication system, is evolving into a packet service communication system for a high-speed packet service. For the high-speed packet service, a variety of schemes have been proposed, typical including an Adaptive Modulation and Coding (MAC) scheme and a Hybrid Automatic Retransmission Request (HARQ) scheme. Use of the AMC and HARQ schemes contribute to an increase of a data rate. In addition to the AMC and HARQ schemes, there is a space diversity scheme for overcoming a limit of a bandwidth assigned to the mobile communication system, i.e. for increasing a data rate.

The space diversity scheme is generally used in a channel with a low delay spread such as an indoor channel, and a channel with a low Doppler spread such as a pedestrian channel. The space diversity scheme uses two or more antennas to acquire a diversity gain. When a signal transmitted via one transmission antenna is attenuated due to fading, the space diversity scheme receives a signal transmitted via the other transmission antenna, thereby acquiring diversity gain. The space diversity scheme is classified into a reception antenna diversity scheme using a plurality of reception antennas, a transmission diversity scheme using a plurality of transmission antennas, and a MIMO scheme using a plurality of reception antennas and a plurality of transmission antennas.

The MIMO radio communication system is superior to a radio communication system using a Single Input Single Output (SISO) scheme (hereinafter referred to as a "SISO radio communication system") in terms of data rate and reliability. The MIMO radio communication system acquires a diversity gain by performing space multiplexing such that signals transmitted via multiple transmission antennas are independent of each other. That is, the MIMO radio communication system can exchange signals with a plurality of mobile stations (MSs) without using a separate orthogonal spatial channel.

Generally, in a radio channel environment, unlike in a wired channel environment, a transmission signal is actually distorted due to several factors such as multipath interference, shadowing, wave attenuation, time-varying noise, interference, etc. Fading caused by the multipath interference is closely related to mobility of a reflector or a user (or a mobile station), and actually, a mixture of a transmission signal and an interference signal is received. Therefore, the received signal suffers from severe distortion during its actual transmission, reducing performance of the entire mobile communication system. The fading may result in distortion in amplitude and phase of the received signal, preventing high-speed data communication in the radio channel environment. Great attempts are being made to resolve the fading problem. In conclusion, in order to transmit data at high speed, the mobile communication system must minimize a loss due to a characteristic of a mobile communication channel such as fading, and interference of an individual user. As a scheme for preventing unstable communication due to the fading, the MIMO scheme, one of the diversity schemes, is being actively studied.

In a general multiuser diversity radio communication system, a scheduler assigns resource to each of multiple mobile stations according to channel quality information (CQI) for each of the mobile stations. A signal-to-noise ratio (SNR) can be used as the CQI. The multiuser diversity scheme is suitable for high-speed data transmission such as packet data transmission, because the packet data transmission is less sensitive to scheduling delay compared with the data transmission having a constant bit rate like voice. The multiuser diversity scheme can maximize the entire system transmission efficiency by properly scheduling mobile stations that can transmit packet data.

Data for scheduled mobile stations is transmitted in a transmission format by a transmission pre-decoder. Therefore, it is important to take a sum-capacity interference pre-coder into account. It is generally known that pre-coding can support a maximum data rate for a MIMO broadcasting channel, and by managing the data rate the sum of the rates is also maximized. In this case, when selecting a codeword for different receivers, a transmitter performs dirty paper coding for each frequency tone during every time slot. The transmitter first selects a codeword for a first receiver, or a first mobile station. Thereafter, the transmitter selects a codeword containing information related to the codeword for the first mobile station The codeword for the first mobile station can then be subtracted in order to prevent a second mobile station from distinguishing the codeword for the first mobile station. In this manner, a codeword for a third receiver, or a third mobile station, is selected so that the third mobile station will not be able to distinguish the codewords for the first mobile station and the second mobile station, which are interference components for the third mobile station. Such processes are performed for each time slot given for all of the (e.g., 8) mobile stations in the MIMO mobile communication system.

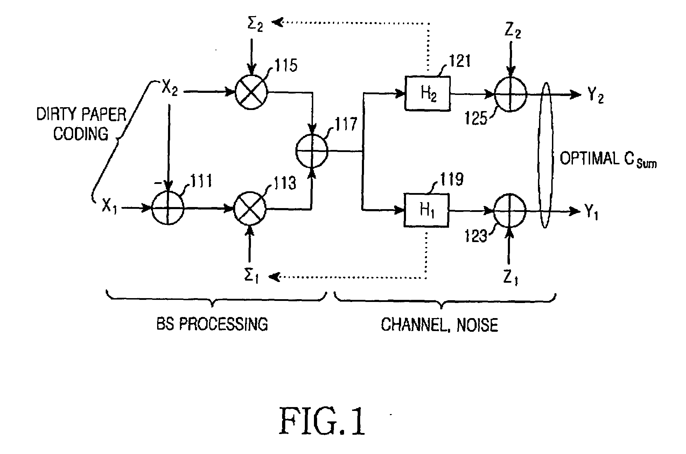

With reference to FIG. 1, a description will now be made of a transmitter for a multiuser MIMO radio communication system using the dirty paper coding scheme.

FIG. 1 is a diagram illustrating a transmitter for a general multiuser MIMO radio communication system. Before a description of FIG. 1 is given, it is assumed that a transmitter shown in FIG. 1, i.e. a transmitter of a base station (BS), services two mobile stations (MSs), a first mobile station and a second mobile station. Referring to FIG. 1, when packet data $X_1$ targeting the first mobile station and packet data $X_2$ targeting the second mobile station are received, the received packet data $X_1$ and $X_2$ are provided to an adder 111. The adder 111 subtracts the packet data $X_2$ from the packet data $X_1$, and outputs the resultant data to a multiplier 113. The packet data $X_2$ is also provided to a multiplier 115. The multiplier 113 multiplies a signal outputs from the adder 111 by $\Sigma_1$, and outputs the resultant signal to an adder 117. The $\Sigma_1$ denotes a channel matrix for the packet data $X_1$. The multiplier 115 multiplies the packet data $X_2$ by $\Sigma_2$, and outputs the resultant signal to the adder 117. The $\Sigma_2$ denotes a channel matrix for the packet data $X_2$. The adder 117 adds the signal output from the multiplier 113 and the signal output from the adder 115, and transmits the resultant signal to the first mobile station and the second mobile station via transmission antennas (now shown). The transmitted signals are added with noises $Z_1$ and $Z_2$ through channels having first and second characteristics $H_1$ (119) and $H_2$ (121) by adders 123 and 125, respectively, and then received at the first and second mobile stations as signals $Y_1$ and $Y_2$, respectively.

If channel metrics for all of the mobile stations are available in the base station, a sum rate capacity is acquired by detecting an optimal covariance metric set, and can be represented by

$$C = \max_{\Sigma_i > 0, \sum_i Tr(\Sigma_i) \le P_T} \frac{1}{2} \log_2 \left| \mathbf{I} + \sum_i \mathbf{H}_i \Sigma_i \mathbf{H}_i^{\dagger} \right| \quad i = 1, \ldots, K \qquad \ldots \ldots \ldots (1)$$

In Equation (1), C denotes a sum rate capacity of the MIMO mobile communication system, 'i' denotes the number of mobile stations from 1 to K, $H_i$ denotes a channel characteristic of an $i^{th}$ channel, $\Sigma_i$ denotes a covariance matrix of an input signal to an $i^{th}$ mobile station, and $H_i^{+}$ denotes a conjugate transpose matrix of $H_i$. Also, "$T_r$" denotes trace, and "$P_\tau$" denotes total power.

In order to maximize the sum rate capacity C of the MIMO mobile communication system, a subset and a transmission covariance matrix for each mobile station must be optimized this process is disclosed in a paper entitled "On The Capacity Of Multiple Input Multiple Output Broadcast Channels" In Proceedings of Int. Conf. Commun., pages 1444-1450, April 2000, by S. Vishwanath, N. Jindal and A. Goldsmith.

Further, the multiuser MIMO radio communication system, a packet switching-based communication system, assigns a channel only when there is transmission packet data. Thus, a scheduling operation, such as channel access and release operations, occurs frequently. Therefore, the entire system capacity of the multiuser MIMO radio communication system depends upon an operation method of a medium access control (MAC) layer that manages the channel access and release operations. However, a detailed operation method of the MAC layer for supporting the scheduling operation of the multiuser MIMO radio communication system also has not been proposed. Therefore, a detailed operation method of a MAC layer for supporting the scheduling operation is also required.

## SUMMARY OF THE INVENTION

It is, an object of the present invention to provide an apparatus and method for controlling an operation of a MAC layer for supporting a resource scheduling operation in a multiuser MIMO radio communication system.

It is another object of the present invention to provide an apparatus and method for scheduling resources according to the channel quality in a multiuser MIMO radio communication system.

It is further another object of the present invention to provide a resource scheduling apparatus and method for maximizing the entire transmission efficiency of a multiuser MIMO radio communication system.

In accordance with one aspect of the present invention, there is provided an apparatus for scheduling resources by a transmitter in a multiuser Multiple Input Multiple Output (MIMO) radio communication system. The apparatus comprises a pre-selector for pre-selecting receivers to be resource-scheduled within a corresponding scheduling epoch based on channel quality information received from receivers; and a transmission pre-coder for pre-coding signals to be transmitted to the receivers pre-selected by the pre-selector in a predetermined coding method.

In accordance with another aspect of the present invention, there is provided an apparatus for scheduling resources by a receiver in a multiuser Multiple Input Multiple Output (MIMO) radio communication system. The apparatus comprises a reception method selector for receiving a signal, demodulating the received signal in a reception method corresponding to a transmission method used in a transmitter, and detecting channel quality information to be used during resource scheduling; a quantizer for quantizing the detected channel quality information; and a feedback information transmitter for transmitting the quantized channel quality information to the transmitter.

In accordance with further another aspect of the present invention, there is provided a method for scheduling resources by a transmitter in a multiuser Multiple Input Multiple Output (MIMO) radio communication system. The method comprises receiving channel quality information received from receivers; scheduling resources for the receivers within a corresponding scheduling epoch based on the received channel quality information; and pre-coding signals to be transmitted to the resource-scheduled receivers in a predetermined coding method.

In accordance with further another aspect of the present invention, there is provided a method for scheduling resources by a receiver in a multiuser Multiple Input Multiple Output (MIMO) radio communication system. The method comprises receiving resource scheduling information assigned to the receiver; receiving a signal, demodulating the received signal in a reception method corresponding to a transmission method used in a transmitter, and detecting channel quality information to be used during resource scheduling; quantizing the detected channel quality information; and transmitting the quantized channel quality information to the transmitter.

## BRIEF DESCRIPTION OF THE DRAWINGS

The above and other objects, features and advantages of the present invention will become more apparent from the following detailed description when taken in conjunction with the accompanying drawings in which:

FIG. 1 is a diagram illustrating a transmitter for a general multiuser MIMO radio communication system;
FIG. 2 is a diagram illustrating a configuration of a multiuser MIMO radio communication system according to an embodiment of the present invention;
FIG. 3 is a block diagram illustrating an internal structure of the pre-MAC processor of FIG. 2;
FIG. 4 is a block diagram illustrating an internal structure of the scheduler of FIG. 2; and
FIG. 5 is a diagram illustrating forward and reverse logical control channels according to an embodiment of the present invention.

## DETAILED DESCRIPTION OF THE PREFERRED EMBODIMENT

A preferred embodiment of the present invention will now be described in detail with reference to the annexed drawings. In the drawings, the same or similar elements are denoted by the same reference numerals even though they are depicted in different drawings. In the following description, a detailed description of known functions and configurations incorporated herein has been omitted for conciseness.

As described above, in order to maximize the entire system capacity, the multiuser MIMO radio communication system must perform scheduling based on the CQI for each mobile station. However, there is no currently available separate scheduling method for maximizing the entire system capacity of the multiuser MIMO radio communication system. Therefore, there is a demand for a scheduling method to maximize the entire system capacity. In addition, the current multiuser MIMO radio communication system does not have a separate method for feeding back the CQI for each mobile station. Therefore, a method for feeding back the CQI for scheduling is also required.

The present invention provides a resource scheduling method for maximizing a sum rate capacity in a multiuser MIMO radio communication system. In particular, the present invention provides a resource scheduling method for scheduling resources according to the channel quality information (CQI) fed back from mobile stations, to thereby maximize a sum rate capacity, and enabling the mobile stations to perform a scheduling-related operation, or a CQI feedback operation, before the mobile stations receive reception signals, to thereby minimize a scheduling delay. In addition, the present invention provides a method for operating a MAC layer of the multiuser MIMO radio communication system, for supporting the scheduling operation.

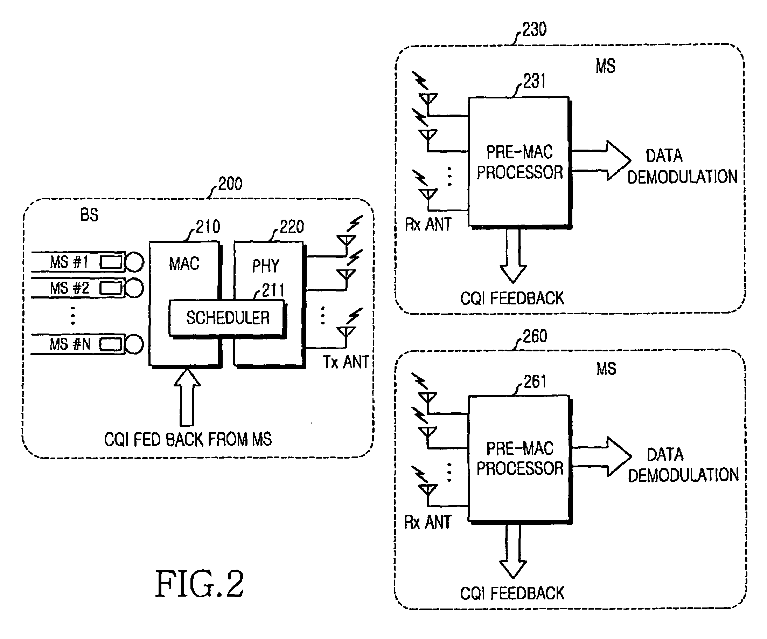

FIG. 2 is a diagram illustrating a configuration of a multiuser MIMO radio communication system according to an embodiment of the present invention. Referring to FIG. 2, the multiuser MIMO radio communication system is comprised of a transmitter, or a base station (BS) 200, and a plurality of receivers, or mobile stations (MSs) 230 and 260. Although it is assumed in FIG. 2 that the transmitter serves as a base station and the receiver serves as a mobile station, the transmitter may serve as a mobile station and the receiver may serve as a base station.

In FIG. 2, because the multiuser MIMO radio communication system uses a multiuser MIMO scheme, each of the base station 200 and the mobile stations 230 and 260 includes a plurality of transmission antennas Tx_ANT and reception antennas Rx_ANT for signal transmission/reception. For the convenience of explanation, it will be assumed in FIG. 2 that the base station 200 includes a plurality of transmission antennas for signal transmission and each of the mobile stations 230 and 260 includes a plurality of reception antennas for signal reception. Further, it will be assumed in FIG. 2 that the base station 200 includes M transmission antennas, and each of the mobile stations includes N reception antennas.

The base station 200 includes a plurality of queues (now shown) for buffering packet data targeting the mobile stations 230 and 260. The number of the queues included in the base station 200 is equal to the number of the mobile stations 230 and 260, and the base station 200 buffers packet data targeting to the mobile stations 230 and 260 in their corresponding queues. In FIG. 2, because it is assumed that the base station 200 communicates with both of the mobile stations 230 and 260, the number of the queues is also 2.

The base station 200 has a hierarchical structure of a MAC layer 210 and a physical (PHY) layer 220, and includes a scheduler 211 for scheduling transmission of one or two or more base station signals in the MAC layer 210 and the physical layer 220. An operation of the scheduler 211 will now be described below.

The scheduler 211 operates in both the MAC layer 210 and the physical layer 220. Thus, the scheduler 211 can enable both the base MAC layer 210 and the physical layer 220 to detect channel quality information (CQI) of forward channels fed back from the mobile stations 230 and 260. The CQIs fed back from the mobile stations 230 and 260 is received via the MAC layer 210 of the base station 200, and because the scheduler 211 operates in both the MAC layer 210 and the physical layer 220, it can use the CQIs fed back from the mobile stations 230 and 260 even when controlling an operation of the physical layer 220.

In addition, the scheduler 211 controls packet transmission to the mobile stations 230 and 260 according to a predetermined scheduling rule such that packet data is transmitted according to the size of the packet data stored in the queues corresponding to the mobile stations 230 and 260. That is, the scheduler 211 adaptively assigns resources available in the base station 200, such as time slots, frequency blocks and transmission antennas, according to the situations of the mobile stations 230 and 260. The packet data transmission-scheduled by the scheduler 211 is multiplexed by a multiplexer (not shown) before being transmitted.

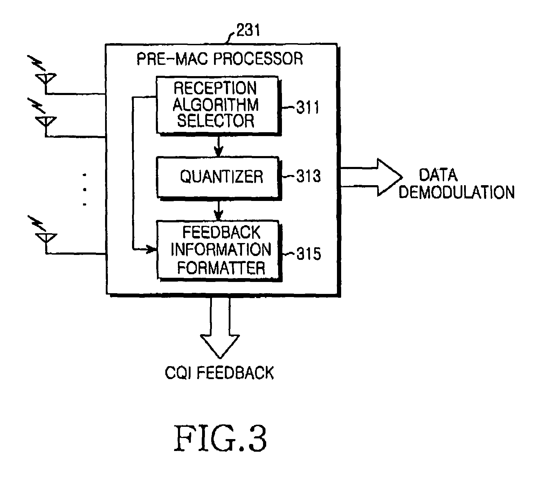

Each of the mobile stations 230 and 260 includes a pre-MAC processor. That is, the mobile station 230 includes a pre-MAC processor 231, and the mobile station 260 includes a pre-MAC processor 261. The pre-MAC processor 231 generates CQI of the mobile station 230 and feeds back the CQI to the base station 200, and the pre-MAC processor 261 generates CQI of the mobile station 260 and feeds back the CQI to the base station 200. The reason that the pre-MAC processors 231 and 261 transmit the CQIs of the mobile stations 230 and 260, respectively, is to enable the base station 200 to adaptively perform multiuser MIMO-based scheduling according to channel qualities of the mobile stations 230 and 260. An internal structure of each of the pre-MAC processors 231 and 261 will be described in detail with reference to FIG. 3.

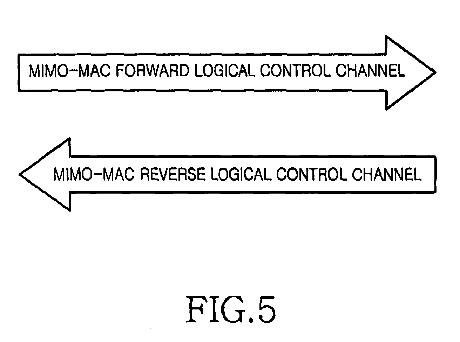

There exist forward channels and reverse channels between the base station 200 and the mobile stations 230 and 260. In particular, there exist logical control channels both in the forward and reverse channels. A result of a scheduling algorithm, i.e. a scheduling result of the base station 200, is transmitted over the forward logical control channels, and CQIs of the mobile stations 230 and 260, generated by the pre-MAC processors 231 and 261, respectively, are transmitted over the reverse logical control channels. The forward and reverse logical control channels will be described in detail with reference to FIG. 5.

The configuration of the multiuser MIMO radio communication system has been described so far with reference to FIG. 2. Next, with reference to FIG. 3, a description will be made of an internal structure of the mobile station 230, and in particular the pre-MAC processor 231.

FIG. 3 is a block diagram illustrating an internal structure of the pre-MAC processor 231 of FIG. 2. Before a description of FIG. 3 is given, it is noted that the pre-MAC processors 231 and 261 are identical in internal structure, and for the convenience of explanation, only the pre-MAC processor 231 is described with reference to FIG. 3. Referring to FIG. 3, the pre-MAC processor 231 is comprised of a reception algorithm selector 311, a quantizer 313, and a feedback information formatter 315.

The pre-MAC processor 231 quantizes the CQI of the mobile station. The reception algorithm selector 311 selects a reception algorithm, or a reception method, according to a situation of the multiuser MIMO radio communication system. Further, the reception algorithm selector 311 generates the CQI according to the selected reception algorithm using the MIMO channel signals received via the N reception antennas, and then outputs the generated CQI to the quantizer 313. The reception algorithm selector 311 can generate the CQI in one of the following three methods.

A first method is to generate the CQI taking into consideration only the channel quality at a current reception time.

A second method is to generate the CQI taking into consideration both the channel quality at a current reception time and the channel quality at a previous reception time.

A third method is to generate the CQI in an expected format taking into consideration the channel quality at a current reception time or the channel quality at a previous reception time.

The reception algorithm selector 311, as described above, can select one of the reception algorithms according to a situation of the multiuser MIMO radio communication system, to generate the CQI. The reception algorithm selector 311 can select a reception algorithm in one of the following three methods and generate the CQI.

In a first method, the reception algorithm selector 311 generates the CQI using one of a Zero Forcing (ZF) reception algorithm and a Minimum Mean Square Error (MMSE) reception algorithm. The reception algorithm selector 311 generates the CQI that includes a reception signal-to-noise ratio (SNR) per transmission antenna.

In a second method, the reception algorithm selector 311 generates the CQI using a Successive Canceling (SC) reception algorithm. The reception algorithm selector 311 generates the CQI that includes a reception SNR per antenna on the assumption that optimal ordering and canceling are performed at a receiver.

In a third method, the reception algorithm selector 311 generates the CQI using an optimal reception algorithm. The reception algorithm selector 311 generates a channel gain matrix H as the CQI.

Table 1 below compares a CQI generated by the reception algorithm 311 using the ZF reception algorithm, the first method, and a CQI generated using the optimal reception algorithm, the third method.

### Table 1

| Rx Algorithm | Feedback Quantity |
|---|---|
| ZF | Effective SNR per Tx antenna, where $k=1\cdots M_T$ <br> $P_{T}\Big/N_o M_t[H_k^H(t)H_k(t)]^{-1}$, where $M_T$ denotes floating-point values |
| Optimal | Channel gain matrix H, <br> $M_T \times M_R$ complex floating-point values |

In Table 1,

$$P_{T}\Big/N_o M_t$$

denotes the SNR, and $H^H$ denotes a Hermitian operation or a complex conjugate operation of a channel gain matrix H. Further, $M_T$ denotes the number of transmission antennas included in a corresponding system, and $M_R$ denotes the number of reception antennas included in the corresponding system. In addition, 'k' denotes a $k^{th}$ antenna.

The reception algorithm selector 311 outputs the generated CQI to the quantizer 313, and the quantizer 313 quantizes the CQI output from the reception algorithm selector 311 and then outputs the quantized CQI to the feedback information formatter 315. The operation in which the quantizer 313 quantizes the CQI output from the reception algorithm selector 311 will be described in detail herein below.

For quantization, the quantizer 313 encodes channel gains for respective transmission/reception paths into a predetermined number of bits, or encodes the channel gains into a partial space based on the channel gain matrix H. In particular, when the reception algorithm selector 311 uses the ZF reception algorithm, the quantizer 313 quantizes the CQI shown in Table 1 at arbitrary precision using a predetermined number of bits. If the reception algorithm selector 311 uses the optimal reception algorithm, the quantizer 313 quantizes the CQI shown in Table 1, i.e. $M_T \times M_R$ channel gain coefficients of the channel gain matrix H, with a predetermined number of bits.

As described in connection with FIG. 3, a different CQI is generated according to the type of the reception algorithm used by the pre-MAC processor 231, and the amount of the feedback CQI information is also different according to the generated CQI. Therefore, the MIMO mobile communication system adaptively selects the reception algorithm according to the system situation to feed back the CQI.

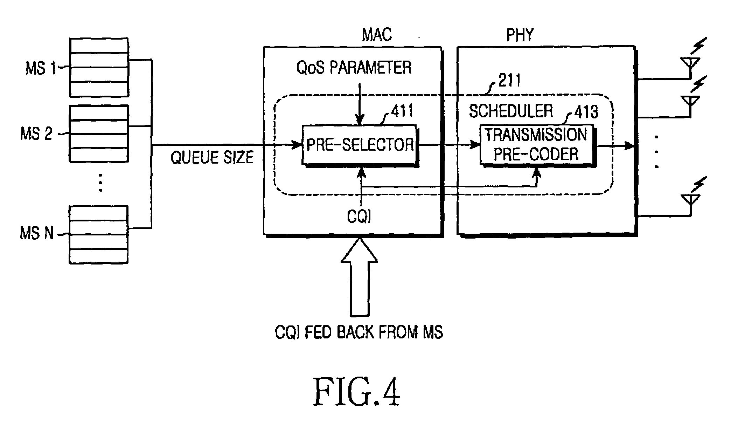

The internal structure of the pre-MAC processor 231 has been described so far with reference to FIG. 3. Next, an internal structure of the scheduler 211 of FIG. 2 will be described with reference to FIG. 4.

FIG. 4 is a block diagram illustrating an internal structure of the scheduler 211 of FIG. 2. Referring to FIG. 4, the scheduler 211 is comprised of a pre-selector 411 and a transmission pre-coder 413, and generates a time-frequency-transmission antenna assignment map for each of the mobile stations 230 and 260 for each frame. Because the scheduler 211 assigns time slots, frequencies and transmission antennas using the CQIs fed back from the mobile stations 230 and 260, the CQIs fed back from the mobile stations 230 and 260 serve as an important factor in source assignment. That is, the scheduler 211 generates the map for assigning time-frequency-transmission antenna resources, representative of sequential transmission scheduling, to the mobile stations 230 and 260 using the CQIs fed back from the mobile stations 230 and 260. The map is generated in the form of a list of frequency tones, time slots and transmission antennas, which are dynamically mapped to the mobile stations 230 and 260 for each frame. The scheduler 211 generates the map for each of the mobile stations 230 and 260 for each frame. The map will be described in detail herein below.

The map proposed in the present invention is illustrated in Table 2 below.

Table 2

| MS identifier | Time-slot | Frequency tones | Antenna | Transmission Method |
|---|---|---|---|---|
| 1 | 1 to 4 | F1, F2 | All | Multiuser |
| 2 | 1 to 5 | All | All | Multiuser |
| ... | ... | ... | ... | ... |
| N | 6 to 10 | All | All | Diversity |

As illustrated in Table 2, the map is comprised of an MS identifier (ID) field, a time-slot field, a frequency tone field, an antenna field, and a transmission method field. The MS ID field includes information related to an ID of a mobile station to which the map is applied. The time slot field includes information related to a time slot assigned to a corresponding mobile station at a corresponding frame. The frequency tone field includes information related to an available frequency set (or block) assigned to the corresponding mobile station. The antenna field represents information related to the antennas assigned at a corresponding time slot and a corresponding frequency tone. The transmission method field includes information related to a reception method for demodulating user data, or packet data. In Table 2, F1 an F2 denote predetermined blocks.

It will be assumed that the number of mobile stations scheduled by the base station is N, including a mobile station #1 to a mobile station #N.

For the mobile station #1, the base station generates a map such that it uses 4 time slots, time slot #1 to a time slot #4, frequency tones F1 and F2, all transmission antennas, and a multiuser transmission method at a corresponding frame. In addition, for a mobile station #2, the base station generates a map such that it uses 5 time slots, time slot #1 to a time slot #5, all frequency tones of the base station, all transmission antennas, and a multiuser transmission method at a corresponding frame. In this manner, for the last mobile station #N, the base station generates a map such that it uses 5 time slots, time slot #6 to a time slot #10, all frequency tones of the base station, all transmission antennas, and a multiuser transmission method at a corresponding frame.

In order to determine an optimal subset during transmission of the mobile stations 230 and 260, various methods can be used. The pre-selector 411 of the scheduler 211 determines an optimal subset for each of the mobile stations 230 and 260 by selecting any one of the various methods. That is, the pre-selector 411 can determine the optimal subset considering class priority, or quality-of-service (QoS) priority, of a corresponding mobile station, a size of packet data buffered in the queues of the base station 200, and a buffering time of the packet data buffered in the queues of the base station 200. For the convenience of explanation, it will be assumed in FIG. 4 that an optimal subset of a corresponding mobile station is determined by considering parameters other than the QoS priority.

For example, if a scheduling epoch is represented by 't', scheduling priority can be determined by

$$\varphi_i = \pi_1^{\left|\frac{\partial C}{\partial \mathbf{H}_i}\right|} \cdot \left(1 - \pi_2^{(t-T_i)}\right) \cdot \pi_3^{\left|\frac{f_i(t)}{f}\right|} \cdot \pi_4^{\left|\frac{C_i(t)}{\hat{C}_i}\right|} + \Delta_i \qquad \ldots\ldots\ldots\ldots (2)$$

In Equation (2), $\varphi_i$ denotes scheduling priority of an $i^{th}$ mobile station, and 'i' denotes the number of mobile stations. Here, a maximum of K mobile stations exist. Further, $\pi_1 \geq 1$, $\pi_2 < 1$, $\pi_3 \leq 1$, $\pi_4 \geq 1$, and the $\pi_1$, $\pi_2$, $\pi_3$ and $\pi_4$ are positive empirical constants. In addition, $\frac{\partial C}{\partial H_i}$ denotes the sensitivity of an $i^{th}$ mobile station for a sum rate capacity of the MIMO mobile communication system, and $T_i$ denotes a time when an $i^{th}$ mobile station was last scheduled. The $\pi_1$, $\pi_2$, $\pi_3$ and $\pi_4$ are empirical constants obtained by considering an appropriate harmony between an overdriving channel and an allowable delay range for each of the mobile stations. In Equation (2), because $\pi_2 < 1$, an increase in value of t-$T_i$ causes an increase in value of $\varphi_i$, meaning that a mobile station having waited for a long time without being scheduled is given a higher scheduling priority.

In Equation (2), $f_i(t)$ denotes a packet data size of an $i^{th}$ mobile station at a time 't', i.e. denotes a size of the packet data stored in a queue for the $i^{th}$ mobile station at the time 't', and $f$ denotes an average packet data size. In Equation (2), because $\pi_3 \leq 1$, a decrease in value of $f_i(t)$ causes an increase in value of $\varphi_i$, meaning that a mobile station having a smaller transmission packet data size is given a higher scheduling priority.

Further, in Equation (2), $C_i(t)$ denotes a currently supported data rate for an ith mobile station at a time 't', and $C_i$ denotes an average data rate of an $i^{th}$ mobile station. In Equation (2), because $\pi_4 \geq 1$, an increase in value of $C_i(t)$ causes an increase in value of $\varphi_i$, meaning that a mobile station having a higher channel quality at a current time rather than a previous time is given a higher scheduling priority.

The scheduling priority $\varphi_i$ in a MIMO mobile communication system will be described herein below considering the priority described in connection with Equation (2).

First, in case of a single-user MIMO mobile communication system, scheduling priority $\varphi_i$ of an $i^{th}$ mobile station is scheduled at a scheduling epoch 't', and a scheduling delay $\Delta_i$ is always 0.

Second, in case of a multiuser MIMO mobile communication system, the mobile station scheduling is performed in the following two steps.

> (1) Step 1: mobile stations with scheduling priority of $\varphi_i$-$\varphi_{max} < \varphi_T$ are pre-selected for a scheduling epoch 't'.

> (2) Step 2: if an $i^{th}$ mobile station was not scheduled for the scheduling epoch 't' in Step 1, a scheduling delay $\Delta_i$ increases.

In this way, the pre-selector 411 pre-selects mobile stations to be scheduled at a corresponding scheduling epoch using a QoS priority-related parameter, a queue size, i.e. a packet data size, and the feedback CQI, and outputs the result to the transmission pre-coder 413. Then the transmission pre-coder 413 performs pre-coding in the method described in connection with Equation (1), and outputs the result via the transmission antennas. That is, in order to obtain a performance metric required in the multiuser MIMO radio communication system, the transmission pre-coder 413 performs pre-coding so that signals for the mobile stations 230 and 260 are mapped to the transmission antennas.

The internal structure of the scheduler 211 of FIG. 2 has been described so far with reference to FIG. 4. Next, a description will be made of the forward and reverse logical control channels with reference to FIG. 5.

FIG. 5 is a diagram illustrating the forward and reverse logical control channels according to an embodiment of the present invention. Referring to FIG. 5, the forward logical control channel proposed in the present invention is called a 'MIMO-MAC forward logical control channel' and the reverse logical control channel proposed in the present invention is called a 'MIMO-MAC reverse logical control channel'. The MIMO-MAC forward logical control channel transmits a map generated by a scheduler of a base station for each mobile station serviced by the base station, i.e. transmits such control information as scheduling information. The MIMO-MAC reverse logical control channel transmits such control information as the CQI generated by each mobile station.

As is appreciated from the foregoing description, the present invention. proposes a MAC layer operation supporting a resource scheduling operation in a multiuser MIMO radio communication system, thereby minimizing a delay in resource scheduling. In addition, the present invention schedules resources according to channel quality in the multiuser MIMO radio communication system, thereby maximizing the entire system transmission efficiency.

While the invention has been shown and described with reference to a certain preferred embodiment thereof, it will be understood by those skilled in the art that various changes in form and details may be made therein without departing from the spirit and scope of the invention as defined by the appended claims.

**Claims**

1. A method for scheduling radio communication system resources by a transmitter in a multiuser Multiple Input Multiple Output (MIMO) radio communication system, the method comprising the steps of:

   receiving channel quality information received from receivers;
   scheduling resources for the receivers within a corresponding scheduling epoch based on the received channel quality information; and
   pre-coding signals to be transmitted to the resource-scheduled receivers in a predetermined coding method.

2. The method of claim 1, wherein the scheduling of resources is based on at least one of the channel quality information received from the receivers, service quality priorities of the receivers, and transmission data sizes for the receivers.

3. The method of claim 1, wherein the pre-coding of signals is based on at least one of a reception method of the receivers and an entire transmission efficiency of the system.

4. The method of claim 1, wherein the predetermined coding method is a dirty paper coding method.

5. The method of claim 1, wherein the channel quality information of the receivers is transmitted over a reverse logical control channel.

6. The method of claim 1, further comprising the step of, after scheduling resource for the receivers, transmitting the resource scheduling information to the resource-scheduled receivers over a forward logical control channel.

7. The method of claim 6, wherein the resource scheduling information includes at least one of time slot information assigned to the receivers, frequency tone information and transmission method information.

8. A method for scheduling radio communication system resources by a receiver in a multiuser Multiple Input Multiple Output (MIMO) radio communication system, the method comprising the steps of:

   receiving resource scheduling information assigned to the receiver;
   receiving a signal, demodulating the received signal in a reception method corresponding to a transmission method used in a transmitter, and detecting channel quality information to be used during resource scheduling;
   quantizing the detected channel quality information; and
   transmitting the quantized channel quality information to the transmitter.

9. The method of claim 8, wherein the resource scheduling information is received over a forward logical control channel.

10. The method of claim 9, wherein the resource scheduling information includes at least one of time slot information assigned to the receiver, frequency tone information and transmission method information.

11. The method of claim 8, wherein the channel quality information is transmitted over a reverse logical control channel.

12. An apparatus for scheduling radio communication system resources by a transmitter in a multiuser Multiple Input Multiple Output (MIMO) radio communication system, the apparatus comprising:

   a pre-selector for pre-selecting receivers to be resource-scheduled within a corresponding scheduling epoch based on channel quality information received from receivers; and
   a transmission pre-coder for pre-coding signals to be transmitted to the receivers pre-selected by the pre-selector in a predetermined coding method.

13. The apparatus of claim 12, wherein the pre-selector pre-selects receivers according to at least one of the channel quality information received from the receivers, service quality priorities of the receivers, and transmission data sizes for the receivers.

14. The apparatus of claim 12, wherein the pre-coder pre-codes signals to be transmitted to the pre-selected receivers based on at least one of a reception method of the receivers and an entire transmission efficiency of the system.

**15.** The apparatus of claim 12, wherein the predetermined coding method is a dirty paper coding method.

**16.** The apparatus of claim 12, wherein the channel quality information of the receivers is transmitted over a reverse logical control channel.

**17.** An apparatus for scheduling radio communication system resources by a receiver in a multiuser Multiple Input Multiple Output (MIMO) radio communication system, the apparatus comprising:

a reception method selector for receiving a signal, demodulating the received signal in a reception method corresponding to a transmission method used in a transmitter, and detecting channel quality information to be used during resource scheduling;
a quantizer for quantizing the detected channel quality information; and
a feedback information transmitter for transmitting the quantized channel quality information to the transmitter.

**18.** The apparatus of claim 17, wherein the reception method selector receives resource scheduling information over a forward logical control channel, and the resource scheduling information includes at least one of time slot information assigned to the receivers, frequency tone information and transmission method information.

**19.** The apparatus of claim 17, wherein the feedback transmitter transmits the channel quality information over a reverse logical control channel.

FIG.1

FIG.2

231

PRE-MAC PROCESSOR

RECEPTION
ALGORITHM
SELECTOR — 311

QUANTIZER — 313

→ DATA
DEMODULATION

FEEDBACK
INFORMATION
FORMATTER — 315

CQI FEEDBACK

FIG.3

FIG.4

EP 1 508 992 A2

MIMO-MAC FORWARD LOGICAL CONTROL CHANNEL

MIMO-MAC REVERSE LOGICAL CONTROL CHANNEL

# FIG.5